Europäisches Patentamt

European Patent Office

Office européen des brevets

(11) Publication number: **0 119 804**
**B1**

# EUROPEAN PATENT SPECIFICATION

(45) Date of publication of patent specification: **23.12.87**

(21) Application number: **84301630.4**

(22) Date of filing: **09.03.84**

(51) Int. Cl.⁴: **C 07 B 57/00,  C 07 C 101/04, C 07 C 101/24,  C 07 C 101/28, C 07 C 129/12,  C 07 C 143/24**

(54) Novel method for optical resolution of DL-alpha-amino acid or (+)-alpha-phenylethanesulfonic acid.

(30) Priority: **16.03.83 JP 43583/83**

(43) Date of publication of application:
**26.09.84 Bulletin 84/39**

(45) Publication of the grant of the patent:
**23.12.87 Bulletin 87/52**

(84) Designated Contracting States:
**CH DE FR GB LI**

(56) References cited:
**EP-A-0 030 871**
**EP-A-0 075 318**
**US-A-4 198 524**

**Greenstein and Winik, Chemistry of the Amino Acids, (Vol. 1), p. 715-717**

The file contains technical information
submitted after the application was filed and
not included in this specification

(73) Proprietor: **Tanabe Seiyaku Co., Ltd.**
**No. 21 Dosho-machi 3-chome Higashi-ku**
**Osaka-shi Osaka-fu (JP)**

(72) Inventor: **Chibata, Ichiro**
**No. 13-2, Fukishirodai 4-chome**
**Suita-shi Osaka-fu (JP)**
Inventor: **Yamada, Shigeki**
**No. 19-13, Uenosaka 1-chome**
**Toyonaka-shi Osaka-fu (JP)**
Inventor: **Hongo, Chikara**
**No. 734, Fuke Misaki-cho**
**Sennan-gun Osaka-fu (JP)**
Inventor: **Yoshioka, Ryuzo**
**No.832-4, Aso-Naka**
**Kaizuka-shi Osaku-fu (JP)**

(74) Representative: **Allard, Susan Joyce et al**
**BOULT, WADE & TENNANT 27 Furnival Street**
**London EC4A 1PQ (GB)**

Courier Press, Leamington Spa, England.

## Description

This invention relates to a novel method for the optical resolution of DL-α-amino acid or (±)-α-phenylethanesulfonic acid. It also relates to a novel diastereoisomeric salt for use in the optical resolution of said amino acid or phenylethanesulfonic acid.

It is known that the optical resolution of DL-α-amino acid can be carried out by taking advantage of the difference in solubility of diastereoisomeric salts which are formed by the reaction of the racemate with an optically active resolving agent. In carrying out the optical resolution of basic or acidic amino acids, acidic or basic resolving agents are usually used to form the diastereoisomeric salts thereof. On the other hand, the optical resolution of a neutral amino acid may be conducted by the steps of converting the amino acid into a suitable derivative thereof, such as an N-acyl derivative, and then reacting the resultant acidic derivative with a basic resolving agent; or by the steps of converting the amino acid into an ester or amide thereof and then reacting the resultant basic derivative with an acidic resolving agent. Alternatively, if strong acids such as camphorsulfonic acid, bromocamphorsulfonic acid, cholestenonesulfonic acid and hydroxymethanesulfonic acid are used as the resolving agents in these methods, the optical resolution of any amino acids, including neutral amino acids, is preferably accomplished without converting the amino acid into its derivative because the strong acids react with all of the amino acids to form the diastereoisomeric salts thereof. However, such strongly acidic resolving agents are still disadvantageous in that they are expensive and/or chemically unstable.

EP—A—75318 (published after the priority date of the present invention) discloses the separation of the optical isomers of DL-p-hydroxy-phenylglycine using optically active α-phenylethane sulfonic acid but no suggestion is made that this method could be applied to the separation of other amino acids.

We have now found that (1) an α-amino acid can be reacted with α-phenylethanesulfonic acid, which can also exist in optically active isomeric forms in an aqueous solvent to form a novel salt, i.e., α-amino acid α-phenylethanesulfonate; and (2) when either one of the reactants to be used in the reaction of the α-amino acid and α-phenylethanesulfonic acid is an optically active isomer, one of the resulting two diastereoisomeric salts is always less soluble in a reaction medium and the other is always more soluble in the medium. Accordingly, optically active α-phenylethanesulfonic acid can be used as a resolving agent in the optical resolution of a DL-α-amino acid, and this method of resolution of α-amino acids is very useful in the industrial production of optically active α-amino acid. In addition, an optically active α-amino acid is a very useful resolving agent in the industrial production of optically active α-phenylethanesulfonic acid.

An object of the present invention is to provide a method for the resolution of a DL-α-amino acid (other than DL-p-hydroxyphenylglycine) using an optically active α-phenylethanesulfonic acid as a resolving agent. Another object of the present invention is to provide a method for the resolution of (±)-α-phenylethanesulfonic acid using an optically active α-amino acid (other than optically active p-hydroxyphenylglycine) as a resolving agent. Another object of the invention is to provide the novel salt, i.e., α-amino acid · α-phenylethanesulfonate (other than p-hydroxyphenylglycine · α-phenylethanesulfonate), which are useful for the production of optically active α-amino acid or optically active α-phenylethanesulfonic acids.

According to the present invention, one diastereomer of α-amino acid · α-phenylethanesulfonate (other than p-hydroxyphenylglycine · α-phenylethanesulfonate) can be prepared by either reacting a DL-α-amino acid (other than p-hydroxyphenylglycine) with an optically active α-phenylethanesulfonic acid or reacting (±)-α-phenylethanesulfonic acid with an optically active α-amino acid (other than p-hydroxy-phenylglycine) in an aqueous solvent to form two diastereoisomeric salts of the DL-α-amino acid · optically active α-phenylethanesulfonate or optically active α-amino acid · (±)-α-phenylethanesulfonate, and then isolating the less soluble diastereoisomeric salt therefrom by the difference in solubility of the diastereoisomeric salts.

This reaction can be utilized in the resolution of an α-amino acid (other than p-hydroxyphenylglycine) or α-phenylethanesulfonic acid. Thus, a DL-α-amino acid (other than p-hydroxyphenylglycine) or (±)-α-phenylethanesulfonic acid can be resolved by using optically active α-phenylethanesulfonic acid or optically active α-amino acid (other than p-hydroxyphenylglycine) as the resolving agent in the above reaction, separating the resultant less soluble diastereoisomeric salt, and converting it into the desired optically active α-amino acid or optically active α-phenylethanesulfonic acid.

Examples of the diastereoisomeric salts of the present invention include the salts of (+) or (−)-α-phenylethanesulfonic acid with optically active α-amino acids such as alanine, arginine, valine, leucine, isoleucine, phenylalanine, phenylglycine, tyrosine, tryptophan, serine, threonine, proline, cysteine, glutamic acid, aspartic acid, histidine, ornithine, lysine or citrulline. Preferred examples of the diastereoisomeric salts include the salts of (+) or (−)-α-phenylethanesulfonic acid with optically active valine, arginine, lysine, phenylglycine or leucine. More preferred examples of the salts include the salt of (−)-α-phenylethanesulfonic acid with L-valine, L-arginine, L-lysine, L-phenylglycine or D-leucine, and the salt of (+)-α-phenylethanesulfonic acid with D-valine, D-arginine, D-lysine, D-phenylglycine or L-leucine.

The DL-α-amino acid or (±)-α-phenylethanesulfonic acid to be used in the present invention may be a mixture of equal amounts of the D- and L-isomer or (+)- and (−)-isomer, i.e., a racemic mixture, or a mixture composed of a larger amount of one isomer and a smaller amount of the other isomer, i.e., a so-called low-purity optically active isomer. For example, the DL-α-amino acid or (±)-α-phenylethane-

sulfonic acid may be that obtained by synthesis, or a low-purity optically active isomer such as that remaining in the mother liquor after the resolution of DL-α-amino acid or (±)-α-phenylethanesulfonic acid using conventional techniques. The optically active isomer or racemic modification of the α-amino acid to be used in the present invention may be either in the free form or as a salt thereof. Examples of such salts include the inorganic addition salts such as hydrochloride or sulfate, or the inorganic addition salts such as oxalate, benzenesulfonate, toluenesulfonate, xylenesulfonate, chlorobenzenesulfonate, nitrobenzensulfonate, naphthalenesulfonate or methanesulfonate. Likewise, the optically active or racemic α-phenylethanesulfonic acid to be used in the present invention may be in the free acid form or it may be in the form of a salt with an alkali metal, such as sodium or potassium, an alkaline earth metal, such as calcium or magnesium, or as a salt with ammonia or amine.

The above-mentioned reaction of the DL-α-amino acid and the optically active α-phenylethanesulfonic acid or the reaction of the (±)-α-phenylethanesulfonic acid and the optically active α-amino acid can be readily carried out in a solvent. Any solvents which dissolve the two reactants and do not interfere with the salt formation thereof can be used in the present invention. Examples of such solvents include water; a lower alkanol such as methanol, ethanol, n-propanol or n-butanol; a lower alkanone such as acetone; a lower alkanoic acid such as acetic acid or propionic acid; or a mixture thereof. It is preferred to carry out the reaction at a temperature in the range of from 5° to 80°C. It is also preferred to use 0.3 to 1.5 moles, more preferably 0.5 to 1.0 moles of the resolving agent (i.e., the optically active α-phenylethanesulfonic acid or the optically active α-amino acid) per mole of the racemate of the α-amino acid or the α-phenylethanesulfonic acid.

In the above-mentioned reaction, when the racemate of valine, arginine, lysine or phenylglycine is used as the DL-α-amino acid and (−)-α-phenylethanesulfonic acid is used as the resolving agent, L-amino acid · (−)-α-phenylethanesulfonate is formed as the less soluble diastereoisomeric salt, and D-amino acid · (−)-α-phenylethanesulfonate is formed as the more soluble diastereoisomeric salt. On the other hand, when the racemate of valine, arginine, lysine or phenylglycine is used as the DL-α-amino acid and (+)-α-phenylethanesulfonic acid is used as the resolving agent, the D-amino acid · (+)-α-phenylethanesulfonate is formed as the less soluble diastereoisomeric salt and the L-amino acid · (+)-α-phenylethanesulfonate is formed as the more soluble diastereoisomeric salt. Furthermore, when the racemate of leucine is used as the DL-α-amino acid and optically active α-phenylethanesulfonic acid is used as the resolving agent, the L-leucine · (+)-α-phenylethanesulfonate or D-leucine · (−)-α-phenylethanesulfonate is formed as the less soluble diastereoisomeric salt and the D-leucine · (+)-α-phenylethanesulfonate or L-leucine · (−)-α-phenylethanesulfonate is formed as the more soluble diastereoisomeric salt.

Likewise, the diastereoisomeric salts of (+) or (−)-α-phenylethanesulfonic acid can be readily formed by reacting the racemic modification thereof with an optically active α-amino acid. For example, when (±)-α-phenylethanesulfonic acid is reacted with L-valine, L-arginine, L-lysine or L-phenylglycine, the L-amino acid · (−)-α-phenylethylanesulfonate is formed as the less soluble diastereoisomeric salt and the L-amino acid · (+)-α-phenylethanesulfonate is formed as the more soluble diastereoisomeric salt. On the other hand, when (±)-α-phenylethanesulfonic acid is reacted with D-valine, D-arginine, D-lysine or D-phenylglycine, the D-amino acid · (+)-α-phenylethanesulfonate is formed as the less soluble diastereoisomeric salt and the D-amino acid · (−)-α-phenylethanesulfonate is formed as the more soluble diastereoisomeric salt. Furthermore, when (±)-α-phenylethanesulfonic acid is reacted with optically active leucine, L-leucine · (+)-α-phenylethane-sulfonate or D-leucine · (−)-α-phenylethanesulfonate is formed as the less soluble diastereoisomeric salt and D-leucine · (+)-α-phenylethanesulfonate or L-leucine · (−)-α-phenylethanesulfonate is formed as the more soluble diastereoisomeric salt.

When the diastereoisomeric salts of the amino acid · α-phenylethanesulfonate are formed in the above-mentioned reaction, the diastereoisomeric salts can be readily separated from each other by their difference in solubility. For example, the crystallization of the less soluble diastereoisomeric salt can be carried out by cooling or concentration of the reaction mixture or by adding an organic solvent thereto, and the less soluble salt is thereby obtained as crystals in high purity. The separated less soluble diastereoisomeric salt is recovered from the reaction mixture according to conventional solid-liquid separation techniques, such as filtration and centrifugation. The less soluble diastereoisomeric salt thus obtained may be, if necessary, subjected to a further treatment, such as washing or recrystallization.

Each diastereoisomeric salt formed in the above reaction is a novel optically pure salt composed of 1 mole of optically active α-amino acid and 1 mole of optically active α-phenylethanesulfonic acid.

The less soluble diastereoisomeric salt thus obtained can readily be converted to optically active α-amino acid and optically active α-phenylethanesulfonic acid by treating it with an ion-exchange resin or an alkali agent. For example, when an aqueous solution of one diastereoisomeric salt of α-amino acid · α-phenylethanesulfonate is treated with a strong acidic ion-exchange resin, the optically active α-amino acid is adsorbed on the ion-exchange resin and the optically active α-phenylethanesulfonic acid is eluted into the effluent. Moreover, the optically active α-amino acid adsorbed on the ion-exchange resin is readily eluted from the resin in a conventional manner such as by treatment with aqueous ammonia. Furthermore, the optically active α-phenylethanesulfonic acid thus recovered can be used again as the resolving agent in the present invention.

As mentioned hereinbefore, according to the present invention, the desired optically active α-amino acid can be selectively crystallized out in the form of the less soluble diastereoisomeric salt by using (+) or

**0 119 804**

(−)-α-phenylethanesulfonic acid as the resolving agent. Likewise, the desired optically active α-phenyl-ethanesulfonic acid can be selectively crystallized out in the form of the less soluble diastereoisomeric salt by using D or L-α-amino acid as the resolving agent. Since the optically active α-phenylethanesulfonic acid which is used in the present invention is a strong acidic resolving agent, even neutral and acidic amino acids can be directly resolved into the enantiomers thereof without converting them into another derivatives such as an ester or amide derivative thereof. For example, the optical resolution method of the invention can be applied to a variety of acidic, basic and neutral α-amino acids such as alanine, arginine, valine, leucine, isoleucine, phenylalanine, phenylglycine, tyrosine, tryptophan, serine, threonine, proline, cysteine, glutamic acid, aspartic acid, histidine, ornithine, lysine and critrulline, especially an amino acid selected from the group consisting of valine, leucine, arginine, lysine and phenylglycine. Moreover, since optically active α-phenylethanesulfonic acid is a synthetic resolving agent and not one derived from a naturally occurring substance, either one of (+) and (−)-α-phenylethanesulfonic acid are readily available for the optical resolution of the invention. Other advantages of optically active α-phenylethanesulfonic acid are that it is so stable that it does not undergo racemization under the normal conditions of the optical resolution procedures and can be used repeatedly as the resolving agent of the invention.

The method of the present invention using optically active α-phenylethanesulfonic acid is quite useful and advantageous for the industrial scale production of optically active α-amino acids.

In addition, although optically active α-phenylethanesulfonic acid which is an excellent resolving agent has hitherto been hardly commercially available even as a chemical reagent (cf. J. Chem. Soc., 1159 (1927)), according to the present invention it can be readily produced on a large scale.

By the term "lower alkanol" so used herein is meant an alkanol having one to four carbon atoms and by the terms "lower alkanone" and "lower alkanoic acid" are meant as alkanones and alkanoic acids having from two to five carbon atoms.

The present invention will be further described with reference to the following Examples.

[Optical resolution of DL-α-amino acid]
Example 1

A mixture of 10 g of DL-α-amino acid and optically active α-phenylethanesulfonic acid (resolving agent) is dissolved in a solvent under heating. The solution is allowed to stand at room temperature for one day. The resultant precipitates are collected by filtration, washed with a solvent and then dried. The less soluble diastereoisomeric salt of said amino acid thus recovered is dissolved in water (an about 5% aqueous solution of the diastereoisomeric salt is thereby prepared). The solution is passed through a column packed with a strong acidic ion-exchange resin, and the column is washed with water. Then, the column is eluted with 1N aqueous ammonia to liberate the amino acid adsorbed thereon. After the eluate is concentrated to dryness under reduced pressure, about 5 ml of water or methanol are added to the residue. The mixture is cooled, and the resultant precipitates are collected by filtration to give an optically active amino acid. (The optically active amino acid is recovered from the less soluble diastereoisomeric salt in a yield of 85—95%.) The yield of the less soluble diastereoisomeric salt and the purity of the optically active amino acid recovered in the above-mentioned experiment are shown in the following Table 1.

TABLE 1

| DL-α-amino acids used | Resolving agent (g) | Solvents used (ml) | Yield* (g) | Optically active α-amino acids recovered | | |
|---|---|---|---|---|---|---|
| | | | | Obtained isomers | $[\alpha]_D^{25}$ | Optical purity (%) |
| DL-leucine | (+)-isomer (14.2) | water (25) | 7.3 | L-isomer | +9.1° (C=4, 6N-HCl) | 60 |
| DL-valine | (−)-isomer (15.9) | water (22) | 2.6 | L-isomer | +24.3° (C=8, 6N-HCl) | 87 |
| DL-lysine | (−)-isomer (12.7) | water/ methanol (7/120) | 12.0 | L-isomer** | +19.8° (C=8, 6N-HCl) | 94 |
| DL-phenyl- glycine | (+)-isomer (12.3) | n-butanol (400) | 9.6 | D-isomer | −150.1° (C=1, N-HCl) | 95 |

\*: The yield of the less soluble diastereoisomeric salt.
\*\*: The amino acid obtained is lysine monohydrochloride.

4

Example 2

30 g of DL-arginine, 32.1 g of (−)-α-phenylethanesulfonic acid, 38 ml of water and 380 ml of methanol are treated in the same manner as described in Example 1, whereby 13 g of L-arginine · (−)-α-phenylethanesulfonate are obtained as the less soluble diastereoisomeric salt. Then, said diastereoisomeric salt is further treated in the same manner as described in Example 1, whereby 7.3 g of L-arginine monohydrochloride are obtained.

$[\alpha]_D^{25}+15.8°$ (C=8, 6N hydrochloric acid)

Optical purity: 70%.

Optical resolution of (±)-α-phenylethanesulfonic acid

Example 3

To 100 ml of water containing 20 g (ca. 0.11 mole) of (±)-α-phenylethanesulfonic acid, an optically active amino acid (0.11 mole) (resolving agent) is added. The mixture is concentrated to dryness under reduced pressure. The residue is dissolved in water or n-butanol (the amount of water or n-butanol is shown in Table 2) under heating. The solution is cooled or methanol (the amount of methanol is shown in Table 2) is added thereto, and the resultant precipitates are collected by filtration and dried. The less soluble diastereoisomeric salt thus recovered is dissolved in water (an 10% aqueous solution of the diastereoisomeric salt is thereby prepared). The solution is passed through a column packed with a strong ion-exchange resin. The effluent is concentrated under reduced pressure until an about 50% aqueous solution of optically active α-phenylethanesulfonic acid is obtained. The yield of the less soluble diastereoisomeric salt recovered and the purity of optical active α-phenylethanesulfonic acid are shown in the following Table 2 (the optically active α-phenylethanesulfonic acid is recovered from the less soluble diastereoisomeric salt in a yield of 98—100%).

TABLE 2

| Resolving agents used (optically active α-amino acid) | Solvents used (ml) | Yield* (g) | α-phenylethanesulfonic acid recovered | |
|---|---|---|---|---|
| | | | $[\alpha]_D^{25}$ (C=1, water) | Optical purity*** (%) |
| L-leucine | water (33) | 12 | +4.7° | 76 |
| L-valine | water (75) | 5 | −5.8° | 94 |
| L-arginine | water/methanol (38/380) | 3 | −5.0° | 81 |
| L-lysine | water/methanol (10/190) | 18 | −5.8° | 94 |
| D-phenylglycine | n-butanol (450) | 17 | +5.6° | 90 |

*:The yield of the less soluble diastereoisomeric salt.

***: Optical rotation of optically pure α-phenylethanesulfonic acid: $[\alpha]_D^{25}+6.2°$ or $−6.2°$.

**Claims**

1. An α-amino acid α-phenylethanesulfonate (other than p-hydroxy-phenylglycine α-phenylethanesulfonate).

2. A compound as claimed in Claim 1 in which each component thereof, i.e., the α-amino acid and the α-phenylethanesulfonic acid are optically active isomers.

3. A compound as claimed in Claim 1 or Claim 2 in which the α-amino acid is alanine, arginine, valine, leucine, isoleucine, phenylalanine, phenylglycine, tyrosine, tryptophan, serine, threonine, proline, cysteine, glutamic acid, aspartic acid, histidine, ornithine, lysine or citrulline.

4. A compound as claimed in any one of the preceding claims which is L-leucine (+)-α-phenylethanesulfonate, L-valine · (−)-α-phenylethanesulfonate, L-arginine · (−)-α-phenylethanesulfonate, L-lysine (−)-α-phenylethanesulfonate or D-phenylglycine (+)-α-phenylethanesulfonate.

5. A method for resolving a DL-α-amino acid (other than DL-p-hydroxyphenylglycine) which comprises reacting a DL-α-amino acid with an optically active α-phenylethanesulfonic acid to form two diastereoisomeric salts of DL-α-amino acid optically active α-phenylethanesulfonate, collecting the less soluble diastereoisomeric salt therefrom and converting the less soluble diastereoisomeric salt into the optically active α-amino acid.

6. A method as claimed in claim 5 wherein the DL-α-amino acid is alanine, arginine, valine, leucine, isoleucine, phenylalanine, phenylglycine, tryptophan, tyrosine, serine, threonine, proline, cysteine, glutamic acid, aspartic acid, histidine, ornithine, lysine or citrulline.

7. A method as claimed in claim 6 or claim 7 wherein the optically active α-phenylethanesulfonic acid is used in an amount of from 0.3 to 1.5 mole per mole of the DL-α-amino acid.

8. A method as claimed in claim 7 wherein the optically active α-phenylethanesulfonic acid is used in an amount of from 0.5 to 1.0 mole per mole of the DL-α-amino acid.

9. A method as claimed in any one of claims 5 to 8 wherein the reaction is carried out in an aqueous solvent.

10. A method as claimed in claim 9, wherein the solvent is a lower ($C_{1-4}$) alkanol, lower ($C_{2-5}$) alkanone, lower ($C_{2-5}$) alkanoic acid, or a mixture thereof.

11. A method for resolving ($\pm$)-α-phenylethanesulfonic acid which comprises reacting ($\pm$)-α-phenylethanesulfonic acid with an optically active α-amino acid (other than optically active p-hydroxyphenylglycine) to form two diastereoisomeric salts of optically active α-amino acid ($\pm$)-α-phenylethanesulfonate, collecting the less soluble diastereoisomeric salt therefrom and converting the less soluble diastereoisomeric salt into the optically active α-phenylethanesulfonic acid.

12. A method as claimed in claim 11, wherein the optically active α-amino acid is alanine, arginine, valine, leucine, isoleucine, phenylalanine, phenylglycine, tryptophan, tyrosine, serine, threonine, proline, cysteine, glutamic acid, aspartic acid, histidine, ornithine, lysine or citrulline.

13. A method as claimed in claim 11 or claim 12 wherein the optically active α-amino acid is used in an amount of from 0.3 to 1.5 mole per mole of ($\pm$)-α-phenylethanesulfonic acid.

14. A method as claimed in claim 13 wherein the optically active α-amino acid is used in an amount of from 0.5 to 1.0 mole per mole of the ($\pm$)-α-phenylethanesulfonic acid.

15. A method as claimed in any one of claims 11 to 14 wherein the reaction is carried out in an aqueous solvent.

16. A method as claimed in claim 15, wherein the solvent is a lower ($C_{1-4}$) alkanol, lower ($C_{2-5}$) alkanone, lower ($C_{2-5}$) alkanoic acid, or a mixture thereof.


**Patentansprüche**

1. Ein alpha-Aminosäure alpha-Phenylethansulfonat (das sich von p-Hydroxy-phenylglycin alpha-Phenylethansulfonat unterscheidet).

2. Verbindung gemäss Anspruch 1, in welcher jede Komponente davon, d.h. die alpha-Aminosäure und die alpha-Phenylethansulfonsäure, optisch aktive Isomere sind.

3. Verbindung gemäss Anspruch 1 oder 2, in welcher die alpha-Aminosäure Alanin, Arginin, Valin, Leucin, Isoleucin, Phenylalanin, Phenylglycin, Tyrosin, Tryptophan, Serin, Threonin, Prolin, Cystein, Glutaminsäure, Asparaginsäure, Histidin, Ornithin, Lysin oder Citrullin ist.

4. Verbindung gemäss einem der vorhergehenden Ansprüche, nämlich L-Leucin (+)-alpha-phenylethansulfonat, L-Valin-(−)-alpha-phenylethansulfonat, L-Arginin-(−)-alpha-phenylethansulfonat, L-Lysin-(−)-alpha-phenylethansulfonat oder D-Phenylglycin-(+)-alpha-phenylethansulfonat.

5. Verfahren zum Aufspalten einer DL-alpha-Aminosäure (die von DL-p-Hydroxyphenylglycin verschieden ist), dadurch gekennzeichnet, dass man eine DL-alpha-Aminosäure mit einer optisch aktiven alpha-Phenylethansulfonsäure unter Ausbildung von zwei diastereoisomeren Salzen von DL-alpha-Aminosäure-optisch aktivem alpha-Phenylethansulfonat umsetzt, das weniger lösliche diastereoisomere Salz davon sammelt und das weniger lösliche diastereoisomere Salz in die optisch aktive alpha-Aminosäure überführt.

6. Verfahren gemäss Anspruch 5, dadurch gekennzeichnet, dass die DL-alpha-Aminosäure Alanin, Arginin, Valin, Leucin, Isoleucin, Phenylalanin, Phenylglycin, Tryptophan, Tyrosin, Serin, Threonin, Prolin, Cystein, Glutaminsäure, Asparaginsäure, Histidin, Ornithin, Lysin oder Citrullin ist.

7. Verfahren gemäss Anspruch 6 oder 7, dadurch gekennzeichnet, dass man die optisch aktive alpha-Phenylethansulfonsäure in einer Menge von 0,3 bis 1,5 Mol pro Mol der DL-alpha-Aminosäure verwendet.

8. Verfahren gemäss Anspruch 7, dadurch gekennzeichnet, dass man die optisch aktive Phenylethansulfonsäure in einer Menge von 0,5 bis 1,0 Mol pro Mol der DL-alpha-Aminosäure verwendet.

9. Verfahren gemäss einem der Ansprüche 5 bis 8, dadurch gekennzeichnet, dass man die Umsetzung in einem wässrigen Lösungsmittel durchführt.

10. Verfahren gemäss Anspruch 9, dadurch gekennzeichnet, dass das Lösungsmittel ein Niedrig-($C_{1-4}$)-alkanol, ein Niedrig-($C_{2-5}$)-alkanon, eine Niedrig-($C_{2-5}$)-alkansäure oder eine Mischung davon ist.

11. Verfahren zum Spalten von ($\pm$)-alpha-Phenylethansulfonsäure, dadurch gekennzeichnet, dass man ($\pm$)-alpha-Phenylethansulfonsäure mit einer optisch aktiven alpha-Aminosäure (die sich von optisch aktivem p-Hydroxyphenylglycin unterscheidet) unter Ausbildung von zwei diastereoisomeren Salzen von optisch aktivem alpha-Aminosäure-($\pm$)-alpha-phenylethansulfonat umsetzt, das weniger lösliche diastereoisomer Salz davon löst und das weniger lösliche diastereoisomere Salz in die optisch aktive alpha-Phenylethansulfonsäure überführt.

12. Verfahren gemäss Anspruch 11, dadurch gekennzeichnet, dass die optisch aktive alpha-Aminosäure Alanin, Arginin, Valin, Leucin, Isoleucin, Phenylalanin, Phenylglycin, Tryptophan, Tyrosin, Serin, Threonin, Prolin, Cystein, Glutaminsäure, Asparaginsäure, Histidin, Ornithin, Lysin oder Citrullin ist.

13. Verfahren gemäss Anspruch 11 oder 12, dadurch gekennzeichnet, dass die optisch aktive alpha-Aminosäure in einer Menge von 0,3 bis 1,5 Mol pro Mol (±)-alpha-Phenylethansulfonsäure verwendet wird.

14. Verfahren gemäss Anspruch 13, dadurch gekennzeichnet, dass die optisch aktive alpha-Aminosäure in einer Menge von 0,5 bis 1,0 Mol pro Mol der (±)-alpha-Phenylethansulfonsäure verwendet wird.

15. Verfahren gemäss einem der Ansprüche 11 bis 14, dadurch gekennzeichnet, dass man die Umsetzung in einem wässrigen Lösungsmittel durchführt.

16. Verfahren gemäss Anspruch 15, dadurch gekennzeichnet, dass das Lösungsmittel ein Niedrig-$(C_{1-4})$-alkanol, ein Niedrig-$(C_{1-4})$-alkanon, eine Niedrig-$(C_{2-5})$-alkansäure oder eine Mischung davon ist.

## Revendications

1. Un α-phényléthanesulfonate d'α-amino-acide (autre que l'α-phényléthanesulfonate de p-hydroxyphénylglycine).

2. Un composé selon la revendication 1, dans lequel chacun de ses constituants, à savoir l'α-amino-acide et l'acide α-phényléthanesulfonique, sont des isomères optiquement actifs.

3. Composé selon la revendication 1 ou 2, dans lequel l'α-amino-acide est l'alanine, l'arginine, la valine, la leucine, l'isoleucine, la phénylalanine, la phénylglycine, la tyrosine, le tryptophane, la sérine, la thréonine, la proline, la cystéine, l'acide glutamique, l'acide aspartique, l'histidine, l'ornithine, la lysine ou la citrulline.

4. Un composé selon l'une quelconque des revendications précédentes qui est le (+)-α-phényléthanesulfonate de L-leucine, le (−)-α-phényléthanesulfonate de L-valine, le (−)-α-phényléthane-sulfonate de L-arginine, le (−)-α-phényléthanesulfonate de L-lysine ou le (+)-α-phényléthanesulfonate de D-phénylglycine.

5. Un procédé de dédoublement d'un DL-α-amino-acide (autre que la DL-p-hydroxyphénylglycine) qui consiste à faire réagir un DL-α-amino-acide avec un acide α-phényléthanesulfonique optiquement actif en vue de la formation des deux sels diastéreoisomères d'α-phényléthanesulfonate optiquement actif de DL-α-amino-acide, à recueillir à partir de là le sel diastéréoisomère le moins soluble et à transformer le sel diastéréoisomère le moins soluble en l'α-amino-acide optiquement actif.

6. Procédé selon la revendication 5, dans lequel le DL-α-amino-acide est l'alanine, l'arginine, la valine, la leucine, l'isoleucine, la phénylalanine, la phénylglycine, le tryptophane, la tyrosine, la sérine, la thréonine, la proline, la cystéine, l'acide glutamique, l'acide aspartique, l'histidine, l'ornithine, la lysine ou la citrulline.

7. Procédé selon la revendication 6 ou 7, dans lequel l'acide α-phényléthanesulfonique optiquement actif est employé à raison de 0,3 à 1,5 moles par mole de DL-α-amino-acide.

8. Procédé selon la revendication 7, dans lequel l'acide α-phényléthanesulfonique optiquement actif est employé à raison de 0,5 à 1,0 mole par mole de DL-α-amino-acide.

9. Procédé selon l'une quelconque des revendications 5 à 8, dans lequel la réaction est conduite dans un solvant aqueux.

10. Procédé selon la revendication 9, dans lequel le solvant est un alcanol inférieur en $C_1$ à $C_4$, une alcanone inférieure en $C_2$ à $C_5$, un acide alcanoïque inférieure en $C_2$ à $C_5$ ou un mélange de ceux-ci.

11. Un procédé de dédoublement d'acide (±)-α-phényléthanesulfonique qui consiste à faire réagir l'acide (±)-α-phényléthanesulfonique avec un α-amino-acide optiquement actif (autre que la p-hydroxyphénylglycine optiquement active) en vue de la formation de deux sels diastéréoisomères de (±)-α-phényl-éthanesulfonate d'α-amino-acide optiquement actif, à recueillir à partir de là le sel diastéréoisomère moins soluble et à transformer le sel diastéréoisomère moins soluble en l'acide α-phényléthanesulfonique optiquement actif.

12. Procédé selon la revendication 11, dans lequel l'α-amino-acide optiquement actif est l'alanine, l'arginine, la valine, la leucine, l'isoleucine, la phénylalanine, la phénylglycine, le tryptophane, la tyrosine, la sérine, la thréonine, la proline, la cystéine, l'acide glutamique, l'acide aspartique, l'histidine, l'ornithine, la lysine ou la citrulline.

13. Procédé selon la revendication 11 ou 12, dans lequel l'α-amino-acide optiquement actif est employé à raison de 0,3 à 1,5 mole par mole d'acide (±)-α-phényléthanesulfonique.

14. Procédé selon la revendication 13, dans lequel l'α-amino-acide optiquement actif est employé à raison de 0,5 à 1,0 mole par mole d'acide (±)-α-phényléthanesulfonique.

15. Procédé selon l'une quelconque des revendications 11 à 14, dans lequel la réaction est conduite dans un solvant aqueux.

16. Procédé selon la revendication 15, dans lequel le solvant est un alcanol inférieur en $C_1$ à $C_4$, une alcanone inférieure en $C_2$ à $C_5$, un acide alcanoïque inférieur en $C_2$ à $C_5$ ou un mélange de ceux-ci.